# EUROPEAN PATENT APPLICATION

(11) **EP 2 065 824 A1**
(43) Date of publication of application: **03.06.2009**
(21) Application number: 08020827.5
(22) Date of filing: 01.12.2008
(51) Int. Cl.: G06F 21/00

(54) **HTML filter for prevention of cross site scripting attacks**

(30) Priority: 30.11.2007 US 991504 P
(71) Applicant: Fox Entertainment Group, Los Angeles, CA 90067 (US)
(72) Inventor: Kunal, Anand, Los Angeles, CA 90067 (US); Kaminsky, Dan, Los Angeles, CA 90067 (US)
(74) Representative: Delorme, Nicolas

(57) **Abstract**

An HTML filter is described that converts HTML tags into HTML object and associated param tags. In an exemplary embodiment, the present HTML filter also validates existing object tags so that they may render in at least one, and optionally all, major browsers. In another exemplary embodiment, the presently described HTML filter also serves as a configurable whitelist for rich media (through controlling particular attributes, e.g., "classid", in the object tag and affiliated param tags).

## Description

### BACKGROUND

Internet web sites, and in particular, social networks, have evolved into media rich experiences. While allowing users to embed rich media creates a more engaging online environment, such embedded rich media presents certain security risks. Specifically, such embedding of rich media forces website administration to sanitize content to prevent cross site scripting (XSS) attacks that might otherwise occur. However, given the amount of user-generated input on such sites as well as the server's ability to manipulate headers for file extensions, it is difficult if not impossible to crawl and check the validity of remote data (headers and file analysis).

What is needed in the art are effective mechanisms for preventing such cross site scripting attacks without neglecting to address embed and object tags.

### SUMMARY

The present invention recognizes that embed tags are inherently insecure and can allow remote code execution on a web site through various file formats, including but not limited to Quicktime, Adobe PDF, etc.

Similarly, the present invention recognizes that, provided exact construction of both object and param tags, object tags will not only render rich media, but will not execute remote code.

Accordingly, the presently described HTML filter converts HTML tags into HTML object and associated param tags. In an exemplary embodiment, the present HTML, filter also validates existing object tags so that they may render in at least one, and optionally all, major browsers. In another exemplary embodiment, the presently described HTML filter also serves as a configurable whitelist for rich media (through controlling particular attributes, e.g., "classid", in the object tag and affiliated param tags).

### BRIEF DESCRIPTION OF THE DRAWINGS

Referring now to the drawings, wherein like elements are numbered alike in the following FIGURE:

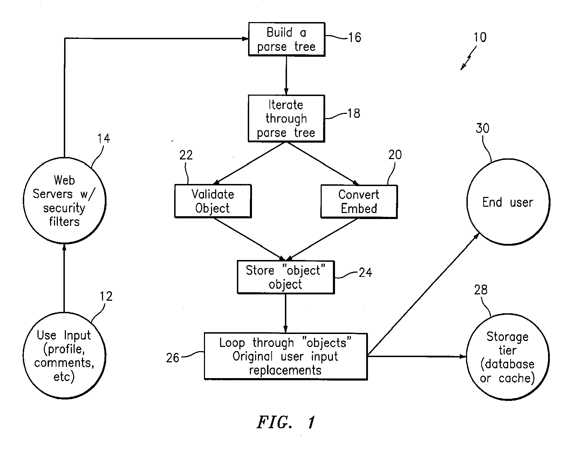

FIGURE 1 is an exemplary flowchart illustrating an exemplary HTML filter process for conversion of embedded rich media to object tags and associated param tags.

### DETAILED DESCRIPTION OF EXEMPLARY EMBODIMENTS

Reference will now be made in detail to exemplary embodiments, examples of which are illustrated by the accompanying drawing.

As is noted above, the presently described HTML filter converts HTML tags into HTML object and associated param tags. In an exemplary embodiment, the present HTML filter also validates existing object tags so that they may render in at least one, and optionally all, major browsers. In another exemplary embodiment, the presently described HTML filter also serves as a configurable whitelist for rich media (through controlling particular attributes, e.g., "classid", in the object tag and affiliated param tags).

Referring now to FIGURE 1, the illustrated flowchart shows an exemplary HTML filter process 10 for conversion of embedded rich media to object tags and associated param tags. In a first step, a user inputs rich media, profile data, comments, etc. at 12. At step 14, the web server runs one or more security filters with regard to the imputed data. The server then builds a parse tree 16 and iterates through the parse tree 18. The server then converts embeds into objects 20, validates objects 22 and stores objects converted from embeds 24. In a further step, the server loops through the stored objects and provides the replacements for the original user input 26. The server then stores the modified input 28 and ends the process 30.

Any of the above described HTML filter configurations will prevent remote code execution or worms with regard to rich media embeds. This will result in significant cost reductions (i.e., time spent for investigations, data cleanup, monetary damages, etc.). Additionally, the above described HTML filter alleviates the need to automatically block typically risky rich media types (e.g., Apple's QuickTime is a particularly target rich engine for site attacks, and it is often entirely blocked). Thus, the system may be configured, with the above described HTML security filter, to accept such (and process) such media without risk of cross site scripting attacks.

It will be apparent to those skilled in the art that, while exemplary embodiments have been shown and described, various modifications and variations can be made to the HTML filter for prevention of cross site scripting attacks as is disclosed herein without departing from the spirit or scope of the invention. Accordingly, it is to be understood that the various embodiments have been described by way of illustration and not limitation.

## Claims

1. A method for modifying hypertext markup language to prevent cross site scripting attacks, comprising:
providing a filter for said hypertext markup language, wherein said filter acts on hypertext markup language tags and converts said tags into hypertext markup language object tags and associated parameter tags to prevent cross site scripting attacks.

2. A method in accordance with claim 1, wherein said hypertext markup language filter also validates existing object tags so that they are configured to render in a plurality of browsers.

3. A method in accordance with claim 1, wherein said hypertext markup language filter further acts as a configurable whitelist for rich media.

4. A method in accordance with claim 3, wherein said hypertext markup language filter controls particular attributes in the object tag and affiliated parameter tags to provide said whitelist.

5. A method in accordance with claim 4, wherein said hypertext markup language filter controls "classid" attributes in the object tag and affiliated parameter tags.

6. A method in accordance with claim 2, wherein said hypertext markup language filter acts as a configurable whitelist for rich media.

7. A method in accordance with claim 6, wherein said hypertext markup language filter controls particular attributes in the object tag and affiliated parameter tags to provide said whitelist.

8. A method in accordance with claim 7, wherein said hypertext markup language filter controls "classid" attributes in the object tag and affiliated parameter tags.
